# EUROPEAN PATENT APPLICATION

(11) **EP 4 530 617 A1**
(43) Date of publication of application: **02.04.2025**
(21) Application number: 23200926.6
(22) Date of filing: 29.09.2023
(51) Int. Cl.: G01N 23/2252

(54) **IMPROVED EDS CALIBRATION**

(71) Applicant: FEI COMPANY, Hillsboro, OR 97124 (US)
(72) Inventor: Owen, Michael, Geebung, Queensland, 4034 (AU)
(74) Representative: Stellbrink & Partner Patentanwälte mbB

(57) **Abstract**

The present invention relates to a method comprising providing reference data indicative of at least one reference energy-dispersive x-ray spectrum, providing measured data indicative of at least one measured energy-dispersive x-ray spectrum obtained from a sample and determining a transformation based on a comparison of the measured data with the reference data. The present invention also relates to a system configured to carry out the method.

## Description

### Field

The present invention relates generally to methods and structures for identifying sample composition using energy dispersive spectroscopy systems.

### Background

Mineral analysis systems, such as the QEMSCAN^{®} (Quantitative Evaluation of Minerals by Scanning electron microscopy) and MLA (Mineral Liberation Analyzer) from FEI Company, the assignee of the present invention, have been used for many years to determine the presence of valuable minerals in mines. Such systems direct an electron beam toward the sample and measure the energy of x-rays coming from the material in response to the electron beam. One such process is called "energy dispersive x-ray analysis" or "EDS," which can be used for elemental analysis or chemical characterization of a sample. Determining the elements present in a mineral sample is referred to as "elemental decomposition." Beams other than an electron beam can be used to excite the sample. For example, x-ray beams or ion beams can be used as an alternative.

EDS systems rely on the emission of x-rays from a sample to perform elemental analysis. Each element has a unique atomic structure, so x-rays that are characteristic of an element's atomic structure are unique to that element. To stimulate the emission of x-rays from a sample, a beam is directed onto the sample, which causes electrons from inner shells to be ejected. Electrons from outer shells seek to fill this electron void, and the difference in energy between the higher energy shell and the lower energy shell is released as an x-ray, which can be detected by a suitable detector.

By measuring the number and energy of the x-rays emitted from a specimen using an energy-dispersive spectrometer and comparing the measured spectra to a reference library, the unknown elemental composition of the specimen can be determined. The reference library can comprise reference signatures of known compositions. The reference signatures can, for example, comprise reference spectra and/or reference element-intensity values. EDS analysis, especially when coupled with back-scattered electron (BSE) analysis, can be used to quantify a wide range of mineral characteristics, such as mineral abundance, grain size, and liberation, that is, how easy it is to separate a desired mineral from background materials. Existing EDS analysis systems include QEM/SEM technology, which is assigned to FEI Company, Inc, the assignee of the present invention.

A mineral classification system must be capable of comparing each unknown measured spectrum to a library of known mineral signatures, and then making a selection based on which known mineral is most similar to the measured spectrum. Typically, to find the most similar known mineral requires the use of a metric that represents the degree of similarity between the measured data and the known material.

Mineral analysis systems of this type are also used in the oil and gas industry. Drill cuttings (drill bit-induced rock chips) and diamond drill cores can be analyzed to allow geologists to determine the exact nature of the material encountered during drilling, which in turn allows more accurate predictions as to the material still ahead of the drill, thus reducing risk in exploration and production. During drilling, a liquid referred to as "mud" is injected into the well to lubricate the drill and return the cuttings out of the well. A sample can be taken from the mud that includes cuttings from the drill. Documenting cuttings and cores as accurately as possible, both at the time of drilling and post-drilling, is an important facet of analyzing the drilling process. The information obtained from cutting and coring samples allows characterization of down-hole lithological variation in a reservoir sequence, a critical requirement in exploration and production wells, and mineralogical and petrographic studies underpin the fundamental understanding of reservoir and seal characteristics. Traditional optical, scanning electron microscope (SEM), electron probe micro-analyzer (EPMA) and x-ray diffraction (XRD) analysis methods are well established and widely used within the industry.

Mineral analysis attempts to identify the minerals present and their relative proportions at any point to which the electron beam is directed. An analysis instrument typically measures an x-ray signal, determines what elements are present, and then translates that list of elements into a mineral identification using a database of mineral definitions.

A particular mineral always has peaks at certain energies in the x-ray spectrum. To accurately determine which peaks correspond to which minerals, it is necessary to calibrate the instrument being utilized before it can identify the unknown minerals. For this reason, instrument calibration techniques are particularly important for meaningful analysis.

An EDS instrument is typically calibrated using either a standards-based calibration or a standards-less calibration. In standards-based calibration, known materials, referred to as "standards" are analyzed and the results are used to establish a reference library. Unknown samples are then compared to the reference library to determine what elements are present. The calibration standards must be analyzed under identical conditions as the conditions used to analyze the unknown material. Because conditions in the measuring instrument depend on a number of factors, conventional standards-based calibration requires measurement of the full set of standards each day when the machine is used. For example, the QemScan instrument described above currently identifies a maximum of 72 different elements found in mineral samples. Conventional standards-based calibration would require that each instrument have a set of 72 elemental/mineral standards to generate a full set of element signatures. This type of calibration is prohibitively expensive, both in terms of the cost to supply a standard block containing the full set of elemental and mineral standards, and in terms of the operator time required and reduced instrument through-put. In addition, as there are several elements that only exist in minerals and can't be measured individually, it is not possible to perform this calibration for those elements.

Factory calibration using prior art methods is not practical because conventional standards-based decomposition requires that the x-ray spectra of all the elemental standards be acquired on the same machine under the same conditions as the x-ray spectrum of the mineral being analyzed. Prior art suggests that standards based elemental analysis requires that the elemental x-ray spectra need to be measured on the same machine and cannot be taken from another machine. This is because variations in the way a user sets up a particular instrument, including, for example, particular sample geometries, heights, etc., will alter the properties of the x-ray spectrum and affect the calibration.

Using standards-less EDS analysis, an analysis of a particular mineral sample is made without comparing to known standards. Based on characteristics of the spectrum collected, the element list is narrowed and ultimately an element is selected. Standards-less analysis is far more complex and subject to greater inaccuracies than standards-based analysis, but it provides for easy setup for the user because it does not require calibrating the instrument using certain parameters for all possible elements.

Accordingly, what is needed is an efficient calibration method and apparatus that is less costly, simpler and easier to implement, and that allows samples to be measured much more rapidly.

### Summary

The present invention relates to a method comprising providing reference data indicative of at least one reference energy-dispersive x-ray spectrum, providing measured data indicative of at least one measured energy-dispersive x-ray spectrum obtained from a sample and determining a transformation based on a comparison of the measured data with the reference data.

An aim of the present invention may be to increase a match between the measured data and the reference data via the determined transformation. This, in turn, can provide better identification of the materials that make up the sample.

In particular, it may be advantageous for the measured data and the reference data to be aligned. This would mean that the X-ray emission lines of the elements in the reference data and in the measured data have the same energy. Typically, X-ray emission lines of elements can be represented in the measured data and the reference data by corresponding spectral peaks. Ideally, for the same X-ray emission line, the peak in the measured spectrum and the peak in the reference spectrum should be identical. However, for various reasons this may not be the case. That is, there may be a difference in how an X-ray emission line is represented in the reference data and how it is represented in the measured data.

There can be several reasons for this difference or mismatch. One such reason can be related to hardware inaccuracies. Different hardware devices may introduce different errors in obtaining the measured or reference data. Even if the same hardware devices are used to obtain the reference data and the measured data, hardware drift may still cause differences between the reference data and the measured data. Another reason may be related to the process of obtaining the measurement data. For efficiency reasons, the accuracy of the measurement data acquisition may be reduced, resulting in measurement data with inherent inaccuracies. Other reasons may relate to inefficient alignment or calibration algorithms and/or user error.

In addition, this difference can lead to misidentification of the materials that make up a sample when the sample is analyzed, e.g., with an EDS instrument. This can typically be the case with materials having similar chemistry which can be misidentified with each other.

The present invention can thus alleviate these problems by determining a transformation between the measured data and the reference data.

The measured data can comprise measured spectrum peaks. Measured spectrum peaks may typically have a bell curve shape. They may typically resemble a Gaussian function. Measured spectrum peaks can be indicative of a specific energy level at which the sample emitted a substantial number of X-rays. Furthermore, each measured spectrum peak can provide information regarding the number of X-rays detected at that specific energy level. In general, each measured spectrum peak can indicate for a range of consecutive energy levels, respective counts of x-rays emitted within that range.

Each measured spectrum peak can be indicative of a respective element in the sample.

In particular, each measured spectrum peak can be indicative of a specific x-ray emission line of a respective element in the sample.

The method can comprise detecting on the measured data measured spectrum peaks. This detection process typically comprises identifying portions of the measured spectra where the x-ray counts exceed by a predetermined detection threshold the background radiation and any other noise sources.

Throughout the specification the terms "x-ray count" and "x-ray intensity" are used interchangeably.

The reference data can comprise reference spectrum peaks. The above discussion of the measured spectrum peaks applies mutatis mutandis to the reference spectrum peaks.

Each reference spectrum peak can be indicative of a respective element.

Each reference spectrum peak can be indicative of a specific x-ray emission line of a respective element.

The method may further comprise detecting on the measured data calibration peaks. The calibration peaks can be peaks in the measured spectra that can be used for calibration, i.e., for increasing a match between the measured data and the reference data. In particular, the calibration peaks can be used to determine the transformation. It can be advantageous that the calibration peaks can be such that they can distinctly indicate how a particular x-ray emission line was detected during acquisition of the measured data. Therefore, the calibration peaks can serve as a ground truth on how a particular instrument (i.e., the one used to obtain the measured data) can detect a particular x-ray emission line represented by a calibration peak. This information can be used to perform corresponding modifications to the reference data.

The calibration peaks may comprise an intensity which can be higher than a background radiation intensity. This way it can be ensured that the calibration peaks are indicative of elements present in the sample. That is, it can be ensured that the calibration peaks are indicative of x-rays emitted by the sample and no other sources.

The intensity of the calibration peak can refer to the maximum intensity of the calibration peak.

Moreover, the term "intensity" can refer to an x-ray count.

The background radiation intensity can refer to an intensity of background radiation comprising an energy similar to that of the calibration peak. That is, for different calibration peaks, the background radiation intensity might be different depending on the energy of the calibration peak. For example, an energy region encompassing a calibration peak can be defined for determining the intensity of the background radiation. This can for example be an average of the intensity of the background radiation in that energy region.

Furthermore, the background radiation intensity can herein be used to refer to an intensity of radiation generated by any source other than the sample.

For each calibration peak, a ratio between an intensity of the calibration peak and a background radiation intensity can be higher than an intensity ratio threshold. The intensity ratio threshold can be a user defined parameter. Moreover, the intensity ratio threshold can be adjustable.

The intensity ratio threshold can be configured such that it can be ensured that the calibration peaks can indeed be due to x-rays emitted by the sample. Additionally, the intensity ratio threshold can be configured such that they can be due to elements in the sample with a significant weight percentage in the sample. This way, the calibration peak can be a well-defined peak that can allow for a more accurate reading of its energy level.

Each calibration peak can be unobstructed such that any other spectrum peak in the measured data present in the same measured spectrum as the calibration peak has an energy difference from the calibration peak greater than an obstruction threshold.

The calibration peaks can be a subset of the measured spectrum peaks. As discussed above, it can be advantageous that the calibration peaks can be such that they can distinctly indicate how a particular x-ray emission line was detected during acquisition of the measured data. That is, it can be advantageous for the calibration peaks to be well-defined peaks. Therefore, not every measured spectrum peak in the measured data can be utilized as a calibration peak, but rather a subset thereof. Said subset can consist of measured spectrum peaks that fulfil predefined criteria.

Detecting on the measured data calibration peaks can comprise classifying at least some of the measured spectrum peaks as calibration peaks.

Classifying at least some of the measured spectrum peaks as calibration peaks can be based on a respective intensity of the measured spectrum peaks.

Classifying at least some of the measured spectrum peaks as calibration peaks can be based on an intensity of the measured spectrum peaks relative to a background radiation intensity.

A measured spectrum peak can be classified as a calibration peak if a ratio between an intensity of the measured spectrum peak and a background radiation intensity can be higher than an intensity ratio threshold.

Classifying at least some of the measured spectrum peaks as calibration peaks can be based on an energy of the measured spectrum peaks.

A particular measured spectrum peak can be classified as a calibration peak if it can be unobstructed such that any other measured spectrum peak in the measured data, present in the same measured spectrum as the particular measured spectrum peak, has an energy difference from the particular measured spectrum peak that exceeds an obstruction threshold.

At least one measured spectrum peak can be classified as a calibration peak if it can be the highest of the measured spectrum peaks within the measured data corresponding to the same x-ray emission line.

In some embodiments detecting on the measured data calibration peaks can comprise for each measured spectrum in the measured data detecting all measured spectrum peaks in the measured spectrum. The method can further comprise for each measured spectrum in the measured data rejecting measured spectrum peaks in the measured spectrum that comprise a peak-to-background ratio smaller than an intensity ratio threshold, wherein the peak-to-background ratio is a ratio between an intensity of the measured spectrum peak and a background radiation intensity. Alternatively or additionally, the method can comprise for each measured spectrum rejecting measured spectrum peaks in the measured spectrum that overlap with other measured spectrum peaks in that measured spectrum, wherein two peaks in a measured spectrum overlap if they comprise an energy difference that is smaller than an obstruction threshold.

Non-rejected measured spectrum peaks can be grouped in groups according to the x-ray emission line that they are indicative of. That is, each group comprises non-rejected measured spectrum peaks that can be indicative to the same x-ray emission line.

From each of the groups, the non-rejected measured spectrum peak with the highest peak-to-background ratio can be determined as a calibration peak. Therefore, if in the measured data multiple non-rejected measured spectrum peaks exist, then the most well-defined one can be determined to be the calibration peak. Differently put, in general any non-rejected measured spectrum peak can be a calibration peak. However, if for the same x-ray emission line multiple non-rejected measured spectrum peaks are present, only one of them can be sufficient. In such cases the one with the highest peak-to-background ratio can be determined as a calibration peak can be selected as a calibration peak.

Determining a transformation can comprise determining at least one piecewise transformation based on the calibration peaks and the reference data.

The piecewise transformation can allow for a fine alignment between the reference data and the measured data. It can be particularly advantageous as it can alleviate non-linear misalignments between the reference data and the measured data. That is, it can typically be the case that the misalignment between the reference data and the measured data can be a non-linear function of the energy. Therefore, in such cases it may not be sufficient to simply perform a linear transformation of the entire reference data. The piecewise transformation addresses this by allowing the application of different transformations on different energy regions.

The at least one piecewise transformation can be applicable to a portion of a total energy range of the reference data. Said portion can be between a minimum and maximum energy of the calibration peaks, inclusive. In other words, the one or more piecewise transformation overall can be applicable to a portion of a total energy range of the reference data. Given that the piecewise transformation(s) can be determined based on the calibration peaks, the portion wherein the piecewise transformation(s) can be applicable can be bounded by the minimum and by the maximum energy of the calibration peaks.

Outside said portion transformation other than the piecewise transformation(s) can be applicable.

Each of the at least one piecewise transformation can be determined based on a respective pair of consecutive calibration peaks, wherein two calibration peaks can be consecutive if no other calibration peak of the measured data can comprise an energy between the energy of the two consecutive calibration peaks.

Each of the at least one piecewise transformation can be selectively applied to a respective piecewise energy region of the reference data encompassing energies between or equal to respective energies of the respective pair of calibration peaks.

In simple terms, two consecutive calibration peaks can be used to determine a piecewise transformation, and this piecewise transformation can be applicable to an energy region bounded by the energies of the two consecutive calibration peaks. Outside the energy region bounded by the energies of the two consecutive calibration peaks, other piecewise transformations and/or transformations other than the piecewise transformation may be applicable. The above can be true for any pair of consecutive calibration peaks.

Determining a transformation can comprise determining a plurality of piecewise transformations, wherein each one can be determined based on a respective pair of consecutive calibration peaks, wherein two calibration peaks can be consecutive if no other calibration peak of the measured data can be positioned in between.

Each of the piecewise transformations can be selectively applied to a respective piecewise energy region of the reference data encompassing energies between or equal to respective energies of the respective pair of targeted measured peaks.

Each one of the at least one piecewise transformation can be a linear transformation.

The method can comprise storing the piecewise transformation in a memory device.

The method can comprise storing coefficients indicative of the piecewise transformation in a memory device.

Each of the at least one piecewise transformation can be a sub-function of a piecewise function.

The method can comprise computing reference peak-width parameters for a plurality of reference spectrum peaks, respectively.

Each reference peak-width parameter can be indicative of an energy range encompassed by the respective reference spectrum peak.

Each reference peak-width parameter can be indicative of a spread of the respective reference spectrum peak along an energy axis.

Each reference peak-width parameter can be indicative of a standard deviation of the respective reference spectrum peak.

Each reference peak-width parameter can comprise a variance of the respective reference spectrum peak.

The method can comprise computing measured peak-width parameters for a plurality of measured spectrum peaks, respectively.

The method can comprise computing the measured peak-width parameters only for unobstructed measured spectrum peaks, wherein a particular measured spectrum peak can be unobstructed if any other spectrum peak in the measured data, present in the same measured spectrum as the particular measured spectrum peak has an energy difference from the particular measured spectrum peak that exceeds an obstruction threshold. It can be advantageous to utilize the measured peak-width parameter of unobstructed measured peaks only. These measured spectrum peaks can distinctly indicate how a particular x-ray emission line was detected during acquisition of the measured data. Therefore, these measured spectrum peaks can serve as a ground truth on how a particular instrument (i.e., the one used to obtain the measured data) can detect a particular x-ray emission line. This information can be used to perform corresponding modifications to the reference data.

Each measured peak-width parameter can be indicative of an energy range encompassed by the respective measured spectrum peak.

Each measured peak-width parameter can be indicative of a spread of the respective measured spectrum peak along an energy axis.

Each measured peak-width parameter can be indicative of a standard deviation of the respective measured spectrum peak.

Each measured peak-width parameter can comprise a variance of the respective measured spectrum peak.

Determining a transformation can comprise determining a peak-width transformation based on the reference peak-width parameters and on the measured peak-width parameters.

The peak-width transformation can be advantageous because it can allow an adjustment of the shapes, particularly widths, of the peaks of the reference data to such that they can better match with the measured data.

The peak-width transformation can be applicable to an entire energy range of the reference data.

The method can comprise fitting a reference peak-width function on the reference peak-width parameters and fitting a measured peak-width function on the measured peak-width parameters. The reference peak-width function can thus be representative of the reference peak-width parameters. Similarly, the measured peak-width function can thus be representative of the measured peak-width parameters.

The reference and measured peak-width functions can be extrapolated over an entire range of energies of the reference data.

The peak-width transformation can be determined based on the reference peak-width function and on the measured peak-width function.

The peak-width transformation can be determined based on a difference between the reference peak-width function and the measured peak-width function.

The peak-width transformation can be determined based on a square root of a difference of squares of the reference peak-width function and the measured peak-width function.

The method can comprise storing the peak-width transformation in a memory device.

The method can comprise storing a function indicative of the peak-width transformation in a memory device.

The peak-width transformation can be energy dependent.

Applying the peak-width transformation can comprise adjusting the reference peak-width parameter of at least one reference spectrum peak using the peak-width transformation. This way, the widths of the reference spectrum peaks can be adjusted to better match the widths of the measured data.

Determining a transformation can comprise determining an end-to-end transformation based on a first measured spectrum peak, a second measured spectrum peak and the reference data. That is, the end-to-end transformation can utilize only two measured spectrum peaks.

The end-to-end transformation can be applicable to an entire energy range of the reference data.

The end-to-end transformation can be a linear transformation.

The first measured spectrum peak can be a first unobstructed measured spectrum peak with the lowest energy in the measured data and the second measured spectrum can be a second unobstructed measured spectrum peak with the highest energy in the measured data, wherein a particular measured spectrum peak can be unobstructed if any other spectrum peak in the measured data, present in the same measured spectrum as the particular measured spectrum peak has an energy difference from the particular measured spectrum peak that exceeds an obstruction threshold. In other words, the unobstructed peaks of the measured data with the lowest and highest energy can be used to determine the end-to-end transformation.

Applying the end-to-end transformation can comprise applying the end-to-end transformation at energy regions encompassing energies smaller than a minimum energy of the calibration peaks and energies larger thana maximum energy of the calibration peaks. In other words, the application of the end-to-end transformation can be restricted to energy regions that fall outside the range defined by the calibration peaks with the lowest and highest energies. Simply put, the end-to-end transformation may not be necessary in energy regions wherein the piecewise transformation(s) can be applied.

The method can further comprise applying the transformation to the reference data to generate calibrated reference data. The calibrated reference data can therefore better match the measured data. That is, the calibrated reference data may comprise less difference with the reference data.

Applying the transformation to the reference data to generate calibrated reference data can comprise modifying the reference data based on the transformation.

Applying the transformation can comprise applying the at least one piecewise transformation.

Applying the transformation can comprise applying the peak-width transformation.

Applying the transformation can comprise applying the end-to-end transformation.

Applying the transformation can comprise applying the peak-width transformation prior to applying the at least one piecewise transformation.

Applying the transformation can comprise applying the at least one piecewise transformation at energy regions encompassing energies between a minimum and maximum energy of the calibration peaks, inclusive, and applying the end-to-end transformation at energy regions encompassing energies smaller than the minimum energy of the calibration peaks and energies larger than the maximum energy of the calibration peaks.

The method can further comprise determining elements contained in the sample by comparing the measured data to the calibrated reference data.

The method can further comprise determining elemental composition of the sample through elemental decomposition based on the comparison of the measured data to the calibrated reference data.

Providing reference data can comprise generating, using a source instrument, reference data by emitting, using a beam source of the source instrument, a beam toward one or more elemental standards; obtaining, using an x-ray detector of the source instrument, energy-dispersive x-ray spectra of the one or more elemental standards; and generating the reference data from the spectra of the one or more elemental standards.

Obtaining spectra of elemental standards can comprise obtaining spectra of elemental standards in a high-resolution instrument setting in which at least one million x-ray counts can be detected.

Obtaining spectra of elemental standards can comprise obtaining spectra of all naturally occurring elements in mineral analysis.

Providing reference data can comprise generating, using a field instrument, measured data by emitting, using a beam source of the field instrument, a beam toward the sample; obtaining, using an x-ray detector of the field instrument, at least one energy-dispersive x-ray spectrum of the sample; and generating the measured data from the at least one energy-dispersive x-ray spectrum of the sample.

Obtaining at least one energy-dispersive x-ray spectrum of the sample can comprise obtaining at least one energy-dispersive x-ray spectrum of the sample in a lower resolution instrument setting than the high-resolution instrument setting used to generate the reference data.

The method may further comprise identifying the sample.

The present invention may also relate to a method of calibrating an instrument for analysis comprising the method as discussed.

The present invention may also relate to a system comprising a beam source for emitting a beam onto a sample; an x-ray detector for detecting x-rays emitted from the sample upon impact of the beam; a computer readable memory storing reference data indicative of at least one reference energy-dispersive x-ray spectrum and computer instructions for: obtaining measured data indicative of at least one measured energy-dispersive x-ray spectrum obtained from a sample; determining a transformation based on a comparison of the measured data with the reference data.

The computer readable memory may further store computer instructions for applying the transformation to the reference data to generate calibrated reference data The computer readable memory may further store computer instructions for comparing the measured data with the calibrated reference data to determine elements contained in the sample.

The system may further comprise a data processing system configured to receive the computer instructions from the computer readable memory and to execute the computer instructions.

The system can be configured to carry any of the method embodiments discussed above and below.

The present disclosure also relates to the following numbered embodiments.
M 1. A method, comprising:
   providing reference data indicative of at least one reference energy-dispersive x-ray spectrum;
   providing measured data indicative of at least one measured energy-dispersive x-ray spectrum obtained from a sample;
   determining a transformation based on a comparison of the measured data with the reference data.
M2. The method according to any of the preceding embodiments, wherein the measured data comprises measured spectrum peaks.
M3. The method according to the preceding embodiment, wherein each measured spectrum peak is indicative of a respective element in the sample.
M4. The method according to any of the 2 preceding embodiments, wherein each measured spectrum peak is indicative of a specific x-ray emission line of a respective element in the sample.
M5. The method according to any of the preceding embodiments, wherein the method comprises detecting on the measured data measured spectrum peaks.
M6. The method according to any of the preceding embodiments, wherein the reference data comprises reference spectrum peaks.
M7. The method according to the preceding embodiment, wherein each reference spectrum peak is indicative of a respective element.
M8. The method according to any of the 2 preceding embodiments, wherein each reference spectrum peak is indicative of a specific x-ray emission line of a respective element.
M9. The method according to any of the preceding embodiments, further comprising detecting on the measured data calibration peaks.
M10. The method according to the preceding embodiment, wherein the calibration peaks comprise an intensity which is higher than a background radiation intensity.
M 11. The method according to any of the 2 preceding embodiments, wherein for each calibration peak, a ratio between an intensity of the calibration peak and a background radiation intensity is higher than an intensity ratio threshold.
M12. The method according to any of the 3 preceding embodiments, wherein each calibration peak is unobstructed such that any other spectrum peak in the measured data present in the same measured spectrum as the calibration peak has an energy difference from the calibration peak greater than an obstruction threshold.
M13. The method according to any of the 4 preceding embodiments and with the features of embodiment M2, wherein the calibration peaks are a subset of the measured spectrum peaks.
M14. The method according to any of the 5 preceding embodiments and with the features of embodiment M2, wherein detecting on the measured data calibration peaks comprises classifying at least some of the measured spectrum peaks as calibration peaks.
M15. The method according to the preceding embodiment, wherein classifying at least some of the measured spectrum peaks as calibration peaks is based on a respective intensity of the measured spectrum peaks.
M16. The method according to any of the 2 preceding embodiments, wherein classifying at least some of the measured spectrum peaks as calibration peaks is based on an intensity of the measured spectrum peaks relative to a background radiation intensity.
M17. The method according to any of the 3 preceding embodiments, wherein a measured spectrum peak is classified as a calibration peak if a ratio between an intensity of the measured spectrum peak and a background radiation intensity is higher than an intensity ratio threshold.
M18. The method according to any of the 4 preceding embodiments, wherein classifying at least some of the measured spectrum peaks as calibration peaks is based on an energy of the measured spectrum peaks.
M19. The method according to any of the 5 preceding embodiments, wherein a particular measured spectrum peak is classified as a calibration peak if it is unobstructed such that any other measured spectrum peak in the measured data present, in the same measured spectrum as the particular measured spectrum peak has an energy difference from the particular measured spectrum peak that exceeds an obstruction threshold.
M20. The method according to any of the 6 preceding embodiments, wherein at least one measured spectrum peak is classified as a calibration peak if it is the highest of the measured spectrum peaks within the measured data corresponding to the same x-ray emission line.
M21. The method according to any of the preceding embodiments and with the features of embodiment M9, wherein detecting on the measured data calibration peaks comprises
   (a) for each measured spectrum in the measured data:
      (a1) detecting all measured spectrum peaks in the measured spectrum;
      (a2) rejecting measured spectrum peaks in the measured spectrum that comprise a peak-to-background ratio smaller than an intensity ratio threshold, wherein the peak-to-background ratio is a ratio between an intensity of the measured spectrum peak and a background radiation intensity;
      (a3) rejecting measured spectrum peaks in the measured spectrum that overlap with other measured spectrum peaks in that measured spectrum, wherein two peaks in a measured spectrum overlap if they comprise an energy difference that is smaller than an obstruction threshold;
   (b) grouping all non-rejected measured spectrum peaks from (a) in groups according to the x-ray emission line that they are indicative of;
   (c) from each of the groups, determining the non-rejected measured spectrum peak with the highest peak-to-background ratio as a calibration peak.
M22. The method according to any of the preceding embodiments and with the features of embodiment M9, wherein determining a transformation comprises determining at least one piecewise transformation based on the calibration peaks and the reference data.
M23. The method according to the preceding embodiment, wherein the at least one piecewise transformation is applicable to a portion of a total energy range of the reference data.
M24. The method according to the preceding embodiment, wherein said portion is between a minimum and maximum energy of the calibration peaks, inclusive.
M25. The method according to any of the 3 preceding embodiments, wherein each of the at least one piecewise transformation is determined based on a respective pair of consecutive calibration peaks,
   wherein two calibration peaks are consecutive if no other calibration peak of the measured data comprises an energy between the energy of the two consecutive calibration peaks.
M26. The method according to the preceding embodiment, wherein each of the at least one piecewise transformation is selectively applied to a respective piecewise energy region of the reference data encompassing energies between or equal to respective energies of the respective pair of calibration peaks.
M27. The method according to any of the preceding embodiments and with the features of embodiment M9, wherein the determining a transformation comprises determining a plurality of piecewise transformations,
   wherein each one is determined based on a respective pair of consecutive calibration peaks,
   wherein two calibration peaks are consecutive if no other calibration peak of the measured data is positioned in between.
M28. The method according to the preceding embodiment, wherein each of the piecewise transformations is selectively applied to a respective piecewise energy region of the reference data encompassing energies between or equal to respective energies of the respective pair of targeted measured peaks.
M29. The method according to any of the 7 preceding embodiments, wherein each one of the at least one piecewise transformation is a linear transformation.
M30. The method according to any of the 8 preceding embodiments, wherein the method comprises storing the piecewise transformation in a memory device.
M31. The method according to any of the 9 preceding embodiments, wherein the method comprises storing coefficients indicative of the piecewise transformation in a memory device.
M32. The method according to any of the 10 preceding embodiments, wherein each of the at least one piecewise transformation is a sub-function of a piecewise function.
M33. The method according to any of the preceding embodiments, wherein the method comprises computing reference peak-width parameters for a plurality of reference spectrum peaks, respectively.
M34. The method according to the preceding embodiment, wherein each reference peak-width parameter is indicative of an energy range encompassed by the respective reference spectrum peak.
M35. The method according to any of the 2 preceding embodiments, wherein each reference peak-width parameter is indicative of a spread of the respective reference spectrum peak along an energy axis.
M36. The method according to any of the 3 preceding embodiments, wherein each reference peak-width parameter is indicative of a standard deviation of the respective reference spectrum peak.
M37. The method according to any of the 4 preceding embodiments, wherein each reference peak-width parameter comprises a variance of the respective reference spectrum peak.
M38. The method according to any of the preceding embodiments, wherein the method comprises computing measured peak-width parameters for a plurality of measured spectrum peaks, respectively.
M39. The method according to the preceding embodiment, wherein the method comprises computing the measured peak-width parameters only for unobstructed measured spectrum peaks, wherein a particular measured spectrum peak is unobstructed if any other spectrum peak in the measured data, present in the same measured spectrum as the particular measured spectrum peak has an energy difference from the particular measured spectrum peak that exceeds an obstruction threshold.
M40. The method according to any of the 2 preceding embodiments, wherein each measured peak-width parameter is indicative of an energy range encompassed by the respective measured spectrum peak.
M41. The method according to any of the 3 preceding embodiments, wherein each measured peak-width parameter is indicative of a spread of the respective measured spectrum peak along an energy axis.
M42. The method according to any of the 4 preceding embodiments, wherein each measured peak-width parameter is indicative of a standard deviation of the respective measured spectrum peak.
M43. The method according to any of the 5 preceding embodiments, wherein each measured peak-width parameter comprises a variance of the respective measured spectrum peak.
M44. The method according to any of the preceding embodiments and with the features of embodiment M33 and M38, wherein determining a transformation comprises determining a peak-width transformation based on the reference peak-width parameters and on the measured peak-width parameters.
M45. The method according to the preceding embodiment, wherein the peak-width transformation is applicable to an entire energy range of the reference data.
M46. The method according to any of the 2 preceding embodiments, wherein the method comprises fitting a reference peak-width function on the reference peak-width parameters and fitting a measured peak-width function on the measured peak-width parameters.
M47. The method according to the preceding embodiment, wherein the peak-width transformation is determined based on the reference peak-width function and on the measured peak-width function.
M48. The method according to any of the 2 preceding embodiments, wherein the peak-width transformation is determined based on a difference between the reference peak-width function and the measured peak-width function.
M49. The method according to any of the 3 preceding embodiments, wherein the peak-width transformation is determined based on a square root of a difference of squares of the reference peak-width function and the measured peak-width function.
M50. The method according to any of the 6 preceding embodiments, wherein the method comprises storing the peak-width transformation in a memory device.
M51. The method according to any of the 7 preceding embodiments, wherein the comprises storing a function indicative of the peak-width transformation in a memory device.
M52. The method according to any of the 8 preceding embodiments, wherein the peak-width transformation is energy dependent.
M53. The method according to any of the 9 preceding embodiments, wherein applying the peak-width transformation comprises adjusting the reference peak-width parameter of at least one reference spectrum peak using the peak-width transformation.
M54. The method according to any of the preceding embodiments,
   wherein determining a transformation comprises determining an end-to-end transformation based on a first measured spectrum peak, a second measured spectrum peak and the reference data.
M55. The method according to the preceding embodiment, wherein the end-to-end transformation is applicable to an entire energy range of the reference data.
M56. The method according to any of the 2 preceding embodiments,
   wherein the first measured spectrum peak is a first unobstructed measured spectrum peak with the lowest energy in the measured data and
   the second measured spectrum is a second unobstructed measured spectrum peak with the highest energy in the measured data,
   wherein a particular measured spectrum peak is unobstructed if any other spectrum peak in the measured data, present in the same measured spectrum as the particular measured spectrum peak has an energy difference from the particular measured spectrum peak that exceeds an obstruction threshold.
M57. The method according to any of the 3 preceding embodiments and with the features of embodiment M9, wherein applying the end-to-end transformation comprises applying the end-to-end transformation at energy regions encompassing energies smaller than a minimum energy of the calibration peaks and energies larger than a maximum energy of the calibration peaks.
M58. The method according to the any of the preceding embodiments, further comprising applying the transformation to the reference data to generate calibrated reference data.
M59. The method according to the preceding embodiment, wherein applying the transformation to the reference data to generate calibrated reference data comprises modifying the reference data based on the transformation.
M60. The method according to any of the 2 preceding embodiments and with the features of embodiment M22, wherein applying the transformation comprises applying the at least one piecewise transformation.
M61. The method according to any of the 3 preceding embodiments and with the features of embodiment M44, wherein applying the transformation comprises applying the peak-width transformation.
M62. The method according to any of the 4 preceding embodiments and with the features of embodiment M54, wherein applying the transformation comprises applying the end-to-end transformation.
M63. The method according to any of the 5 preceding embodiments and with the features of embodiments M22 and M44, wherein applying the transformation comprises applying the peak-width transformation prior to applying the at least one piecewise transformation.
M64. The method according to any of the 6 preceding embodiments and with the features of embodiments M22 and M54, wherein applying the transformation comprises
   applying the at least one piecewise transformation at energy regions encompassing energies between a minimum and maximum energy of the calibration peaks, inclusive, and
   applying the end-to-end transformation at energy regions encompassing energies smaller than the minimum energy of the calibration peaks and energies larger than the maximum energy of the calibration peaks.
M65. The method according to any of the 7 preceding embodiments, further comprising determining elements contained in the sample by comparing the measured data to the calibrated reference data.
M66. The method according to any of the 8 preceding embodiments, further comprising determining elemental composition of the sample through elemental decomposition based on the comparison of the measured data to the calibrated reference data.
M67. The method according to any of the preceding embodiments, wherein providing reference data comprises generating, using a source instrument, the reference data by:
   emitting, using a beam source of the source instrument, a beam toward one or more elemental standards;
   obtaining, using an x-ray detector of the source instrument, energy-dispersive x-ray spectra of the one or more elemental standards;
   generating the reference data from the spectra of the one or more elemental standards.
M68. The method according to the preceding embodiment, wherein obtaining spectra of elemental standards comprises obtaining spectra of elemental standards in a high-resolution instrument setting in which at least one million x-ray counts are detected.
M69. The method according to any of the 2 preceding embodiments, wherein obtaining spectra of elemental standards comprises obtaining spectra of all naturally occurring elements in mineral analysis.
M70. The method according to any of the preceding embodiments, wherein providing measured data comprises generating, using a field instrument, the measured data by:
   emitting, using a beam source of the field instrument, a beam toward the sample;
   obtaining, using an x-ray detector of the field instrument, at least one energy-dispersive x-ray spectrum of the sample; and
   generating the measured data from the at least one energy-dispersive x-ray spectrum of the sample.
M71. The method according to the preceding embodiment, wherein obtaining at least one energy-dispersive x-ray spectrum of the sample comprises obtaining at least one energy-dispersive x-ray spectrum of the sample in a lower resolution instrument setting than the high-resolution instrument setting used to generate the reference data.
M72. The method according to any of the preceding embodiments, further comprising identifying the sample.
M73. The method according to any of the preceding embodiments and with the features of embodiment M54, wherein the end-to-end transformation is a linear transformation.
M74. A method of calibrating an instrument for sample analysis comprising the method according to any of the preceding embodiments.
S1. A system comprising:
   a beam source for emitting a beam onto a sample;
   an x-ray detector for detecting x-rays emitted from the sample upon impact of the beam;
   a computer readable memory storing reference data indicative of at least one reference energy-dispersive x-ray spectrum and computer instructions for:
      obtaining measured data indicative of at least one measured energy-dispersive x-ray spectrum obtained from a sample;
      determining a transformation based on a comparison of the measured data with the reference data.
S2. The system according to the preceding embodiment, wherein the computer readable memory further stores computer instructions for:
   applying the transformation to the reference data to generate calibrated reference data
S3. The system according to the preceding embodiment, wherein the computer readable memory further stores computer instructions for:
   comparing the measured data with the calibrated reference data to determine elements contained in the sample.
S4. The system according to any of the 3 preceding embodiments, further comprising a data processing system configured to receive the computer instructions from the computer readable memory and to execute the computer instructions.
S5. The system according to any of the 4 preceding embodiments, wherein the system is configured to carry the method according to any of the preceding method embodiments.

### Brief description of the drawings

Fig. 1 is a drawing of a measured spectrum and a corresponding reference spectrum;
Fig. 2 is a drawing illustrating phase misidentification in a mineral;
Fig. 3 illustrates standard deviations for multiple reference spectrum peaks and for multiple measured spectrum peaks and a respective fitting thereof;
Fig. 4 illustrates extrapolations applied on the standard deviations of Fig. 3;
Fig. 5 illustrates an example of a peak-width transformation determined based on the extrapolations of Fig. 4;
Fig. 6 illustrates calibration peaks in a spectrum;
Fig. 7 illustrates piecewise energy portions along a spectrum wherein respective piecewise transformation are selectively applicable;
Fig. 8 illustrates respective piecewise transformation applicable on the piecewise energy portions of Fig. 7;
Fig. 9 is a drawing of a measured spectrum and of corresponding reference spectrum and calibrated reference spectrum;
Fig. 10 is a drawing indicating different phases in a mineral sample identified using teachings of the present disclosure;
Fig. 11 illustrates a peak energy difference between 3 different measured data and corresponding reference data for scenarios wherein the reference data are not calibrated, the reference data are calibrated using existing techniques and the reference data are calibrated using teachings of the present disclosure;
Fig. 12 illustrates a method that can be used to calibrate reference data;
Fig. 13 shows a scanning electron beam with an x-ray detector suitable for analyzing standards according to preferred embodiments of the present invention.

### Detailed description of the drawings

Preferred embodiments of the present invention provide a method for calibrating a local energy dispersive spectroscopy (EDS) instrument using measured data indicative of at least one measured energy-dispersive x-ray spectrum obtained from a sample. Preferably, the local EDS instrument may have stored reference data that may contain high quality spectra for all elements being analyzed. The measured data are compared to the reference data and the comparison is used to define a transformation. The transformation can then be applied to the reference data to generate calibrated reference data which may include a calibrated spectrum for each spectrum in the original reference data. As a result, the spectra contained in the reference data can be much closer to the spectra that would be produced if the respective elements had been analyzed on the same local instrument using the same instrument set-up. The spectra generated by the local EDS instrument can then be compared to the calibrated reference data to determine elements in the sample. This may serve to greatly increase the accuracy of elemental identification.

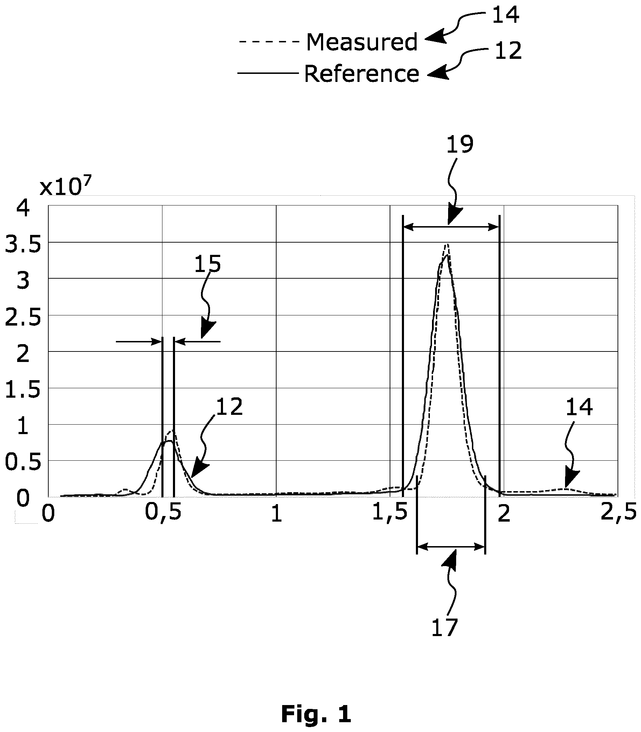

Fig. 1 is a drawing of a measured spectrum 14 and a corresponding reference spectrum 12. It will be understood that throughout the disclosure, unless otherwise implied by the context, the term spectrum refers to energy dispersive x-ray spectrum, i.e., to a spectrum obtained using energy-dispersive x-ray spectroscopy. In the drawing, the horizontal axis is indicative of the energy in keV (kilo electron volts) of the detected x-rays emitted from the sample and the vertical axis is indicative of the number of x-rays, i.e., number of photons or photon count, collected at each energy level. Thus, each spectrum is indicative of a number of x-rays detected at different energy levels. The number of x-rays may also be referred to as intensity.

The measured spectrum 14 can be part of measured data and can be obtained while analyzing a sample using an EDS instrument. The skilled person will appreciate that each peak and in particular the energy of each peak in the measured spectrum 14 is indicative of a respective chemical element. Throughout the disclosure, unless otherwise implied by the context, the term chemical element and element are used interchangeably.

The corresponding reference spectrum 12 can be part of reference data. As any spectrum in the reference data, it can typically be obtained by analyzing, using an EDS instrument, elemental standards, i.e., reference materials the composition of which is known. Moreover, the reference data can typically be obtained using a high-resolution setting of the EDS instrument. Further still, it can be preferable to obtain the reference data on the same type of EDS detector and/or using the same beam voltage as the one(s) used to obtain the measured data. That is, it can be preferable to use similar conditions for obtaining reference data and measured data. This can increase similarity between measured data and corresponding reference data, which in turn increases identification of elements or phases in a sample.

Nevertheless, as it can be challenging to ensure exact conditions for obtaining reference data and measured data, differences therebetween can be expected. Such differences are indicated in Fig. 1, which again depicts a measured spectrum 14 and a corresponding refence spectrum 12 - both indicative of the same material, which in this example is quartz (SiOz). A first difference 15 is illustrated around 0.5 keV, which indicates that there can be a shift 15 between the detected energy of the measured spectrum peak and the energy of the corresponding reference spectrum peak. In this example, both of the peaks are indicative of oxygen. A second difference 17, 19, is illustrated between 1.5 and 2 keV, which indicate that there can be a difference between the width 17 of the measure spectrum peak and the width 19 of the reference spectrum peak. The width of a peak, as used herein, is indicative of a spread of a peak along the energy axis.

Such differences may contribute to errors in identifying unknown elements or phases in a sample. Such misidentification can typically occur for phases with similar elemental compositions, such as, chalcopyrite (CuFeSz), covellite (CuS), chalcocite (Cu₂S) and bornite (Cu₅FeS₄). In particular, misidentification can occur in the boundary between phases with similar elemental compositions.

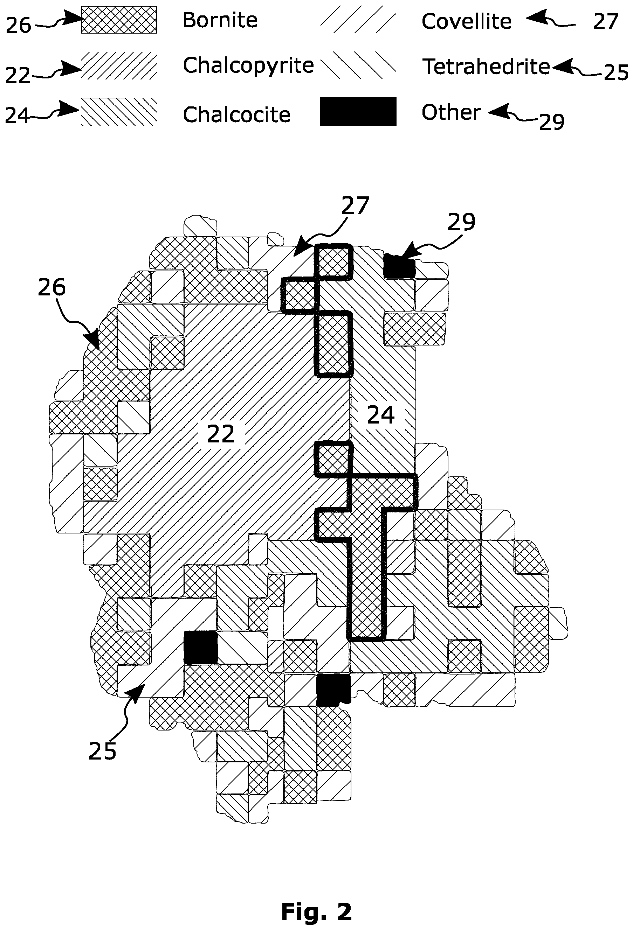

Fig. 2 is a drawing illustrating phase misidentification in a mineral sample. In the drawing, the material contained in each zone of the sample is indicated with respective hatches. In particular, the EDS analysis of the sample shows that it comprises bornite 26, chalcopyrite 22, chalcocite 24, covellite 27, tetrahedrite 25 and other materials 29. The sample zone indicated with the bold outline, represents at least a part of the sample the composition of which is misidentified. In particular, said zone is in a boundary between chalcopyrite 22 and chalcocite 24 and is identified incorrectly as being composed of bornite 26. Such misidentification occurs due to the high similarity in elemental composition of these materials, which in turn means that they contain similar spectrums. As such, differences between measured data and reference data (e.g., as illustrated in Fig. 1) may cause these phases to be misidentified between each other.

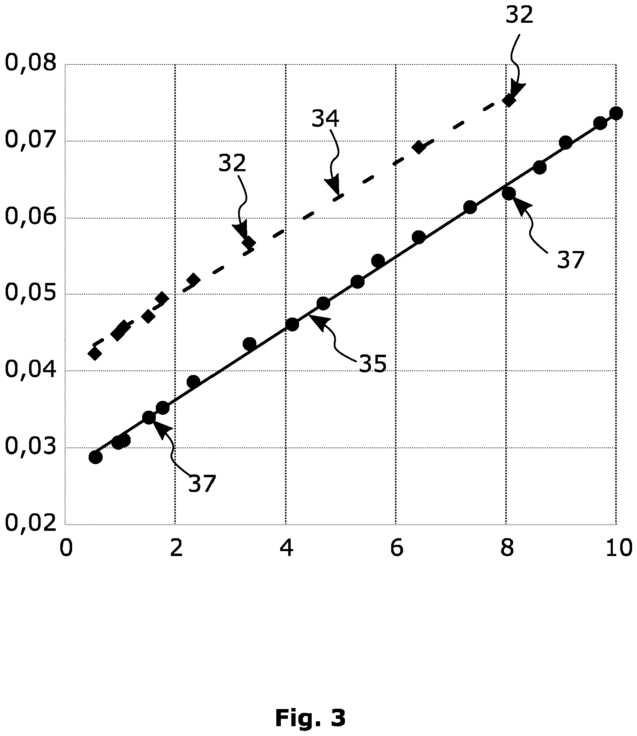

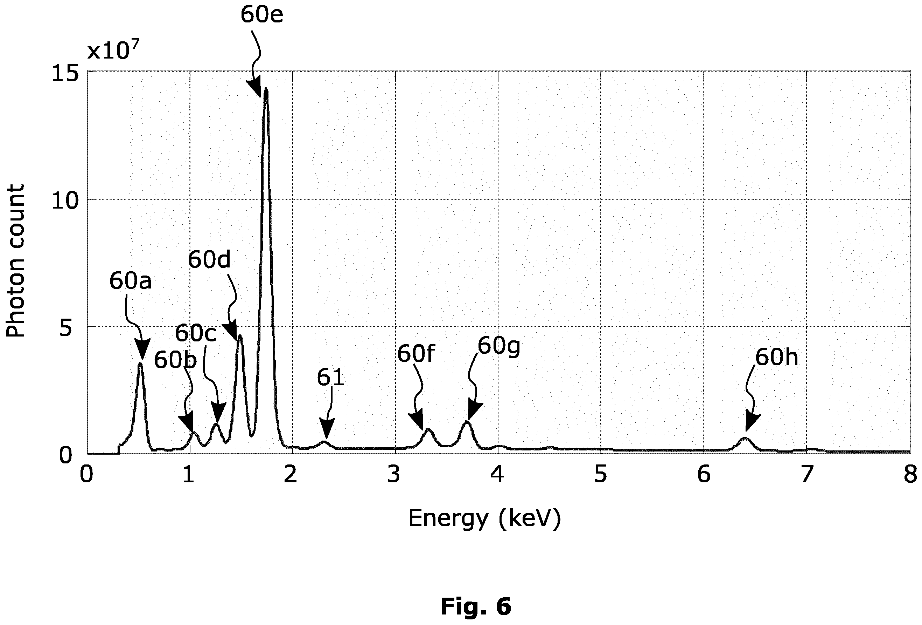

The present disclosure provides different techniques on alleviating differences between measured data and reference data and thereby alleviating phase misidentification. In particular, the present disclosure teaches computing a peak-width transformation (Figs. 3-5) and at least one piecewise transformation (Figs. 6-8). The present disclosure teaches applying the peak-width transformation to reference data to adjust the widths of the reference spectrum peaks 19 (see Fig. 1) and applying the at least one piecewise transformation to selective energy portions of the reference data to reduce or remove the shift 15 (see Fig. 1) between the detected energy of the measured spectrum peak and the energy of the corresponding reference spectrum peak.

Fig. 3 depicts a scatter-plot of standard deviations 32, 37 of measured spectrum peaks and of reference spectrum peak. In particular, squares 32 indicate standard deviations of measured spectrum peaks and circles 37 indicate standard deviations of reference spectrum peaks present in the reference data. As it can be noticed, there can be more standard deviations of reference spectrum peaks than standard deviations of measured spectrum peaks. In the plot, the horizontal axis depicts the energy in keV and the vertical axis is unitless and depicts the standard deviation value. As indicated, in this example, the standard deviations of the measured spectrum peaks are higher than the corresponding standard deviations of the reference spectrum peaks. The skilled person will appreciate that a measured spectrum peak and a reference measured peak are corresponding if the comprise similar energy levels and are therefore indicative of the same material. It will further be understood, that a measured spectrum peak and its corresponding reference measured peak ideally comprise the same energy level.

Although the plot indicates only standard deviations of reference spectrum peaks until 10keV, it will be understood that standard deviation of every reference spectrum peak present in the reference data can be used.

Furthermore, a respective function 34, 35 can be fitted to each set of standard deviations 32, 37. In particular, a reference peak-width function 35 can be fitted to the standard deviations of the reference spectrum peaks and a measured peak-width function 34 can be fitted to the standard deviations of the measured spectrum peaks. Just as an example, a weighted least squares function can be utilized to compute the functions 34, 35. The weights can be computed based on the concentration of elements in the sample. Said concentration can be obtained by comparing the measured data with reference data (i.e., with reference data prior to calibration). Again, the reference peak-width function 35 can extend beyond the depicted energy range and indeed can extend throughout the entire energy range of the reference data.

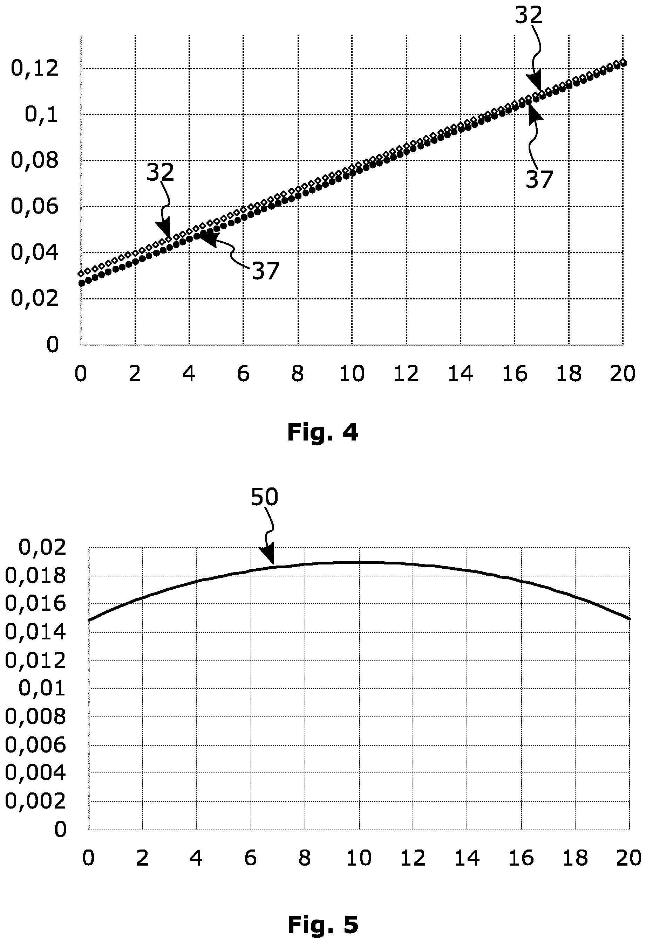

Fig. 4 illustrates extrapolations applied on the standard deviations of Fig. 3. In particular, the computed functions 34, 35 can be used to extrapolate the standard deviations 32, 37 of the measured spectrum peaks and of the reference spectrum peaks over a wider range and higher density of energy levels. As it can be noticed, in Fig. 3 the standard deviations of the measured spectrum peaks lie between 0 and ~8 keV and are extrapolated to a wider range of 0 to 20 keV. In addition, further values may be computed for the standard deviations of the measured and reference spectrum peaks that result in the standard deviations being distributed more densely across the energy range.

Moreo particularly, as illustrated in Fig. 4, the measured peak-width function 34 can be utilized to calculate a respective standard deviation for each energy bin defined between a total energy range of the reference data, which in this example is from 0 to 20 keV. Similarly, the reference peak-width function 35 can be utilized to calculate a respective standard deviation for each energy bin defined between the total energy range of the reference data.

Fig. 5 illustrates an example of a peak-width transformation 50 determined based on the extrapolations of Fig. 4. In this example, for each energy bin defined between the total energy range of the reference data a respective peak-width transformation value can be computed based on a difference between the standard deviation 32 of the measured spectrum peak for that energy bin and the standard deviation 37 of the reference spectrum peak for that energy bin. The computed peak-width transformation values can be stored in a memory device for future use. Alternatively or additionally, a function, such as a polynomial function, can be fitted to the peak-width transformation values and the function can be stored in a memory device for future use.

It will be understood that while the standard deviation was used in the example illustrated in Figs. 3-5 to determine the peak-width transformation 50, in general any other measure of the width of a spectrum peak can be used. That is, generally, a peak-width parameter of a spectrum peak can be used. Said peak-width parameter may be indicative of a spread of a spectrum peak along an energy axis. In some embodiments (as illustrated in Figs. 3-5) the peak-width parameter can be indicative of a standard deviation 32, 37 of a spectrum peak. Alternatively or additionally, the peak-width parameter may be indicative of a variance of a spectrum peak.

Fig. 6 illustrates calibration peaks 60 in a spectrum. The calibration peaks 60 can be a subset of all the spectrum peaks present in a spectrum. The calibration peaks 60 can be spectrum peaks that fulfil predefined requirements. The calibration peaks 60 can be detected by first detecting spectrum peaks in a measured spectrum, then determining which of the spectrum peaks fulfil one or more predefined requirements and classifying spectrum peaks that fulfil the one or more requirements as calibration peaks 60. Alternatively or additionally, the calibration peaks 60 can be detected by storing in a memory device descriptive data of the calibration peaks 60 and then searching on a measured spectrum for the calibration peaks 60 by utilizing the data descriptive of the calibration peaks. Said descriptive data of the calibration peaks 60 may comprise at least one predefined requirement.

Calibration peaks 60 can preferably be unobstructed spectrum peaks.

Furthermore, if for a particular element or for a particular energy level, multiple spectrum peaks are detected in a sample, then it can be advantageous to select the tallest spectrum peak (i.e., the spectrum peak with the highest photon count) as a calibration peak 60. For example, if a sample has various phases, all containing silicon, the silicon peak of the phase with the tallest silicon peak can be selected as a calibration peak 60. Alternatively or additionally, if a sample has various phases, all containing silicon, the silicon peak of the phase which comprises no other material interfering with silicon will be selected as a calibration peak 60. It will be understood that silicon is used herein as a mere example and that the definitions of selecting a calibration peak apply for any particular element.

In Fig. 6, eight calibration peaks 60a-60h are depicted. In the depicted example, a first calibration peak 60a corresponds to the Ko (K-alpha) x-ray emission line of oxygen; a second calibration peak 60b corresponds to the Ko x-ray emission line of natrium; a third calibration peak 60c corresponds to the Ko x-ray emission line of magnesium and a fourth emission line 60e corresponds to the Ko x-ray emission line of aluminum. The fifth to eighth calibration peaks 60f, 60g and 60h similarly correspond to particular x-ray emission lines of elements.

Utilizing consecutive pairs of calibration peaks 60 piecewise transformations can be determined. Two calibration peaks 60 are consecutive if no other calibration peak 60 comprises an energy between the energy of the two consecutive calibration peaks. In the example of Fig. 6, the first calibration peak 60a and the second calibration peak 60b form a first pair of consecutive calibration peaks 60a-60b. Similarly, the second calibration peak 60b and the third calibration peak 60c form a second pair of consecutive calibration peaks 60b-60c. Third to seventh pairs of consecutive calibration peaks are similarly formed by the calibration peaks 60c-60d, 60d-60e, 60e-60f, 60f-60g and 60g-60h.

It will be understood that the spectrum may comprise other peaks as well. For example, the spectrum may comprise peak 61, which is not a calibration peak 60. As illustrated, other peaks 61 that are not calibration peaks 60 may be present between consecutive calibration peaks 60. For example, peak 61 is present between consecutive calibration peaks 60e and 60f.

Each consecutive calibration peak 60 and in particular their respective energies, define respective piecewise energy regions wherein the respective piecewise transformation is applicable.

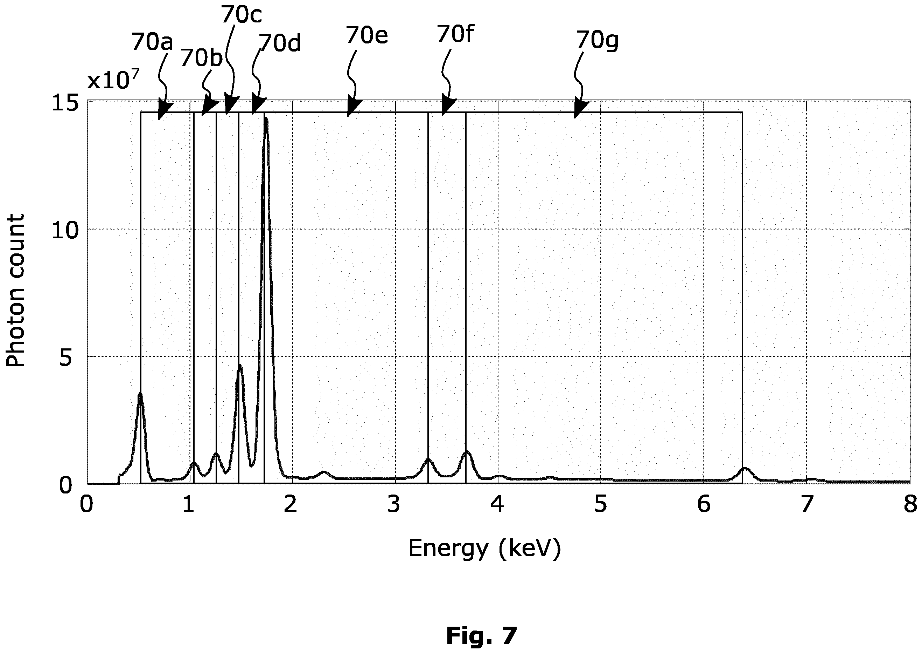

Fig. 7 illustrates said piecewise energy regions 70 outlined over the spectrum of Fig. 6. For each of the pairs of consecutive calibration peaks 60 of Fig. 6, there can be a respective piecewise energy region 70. In particular, the first pair of consecutive calibration peaks 60a-60b can define a first piecewise energy region 70a. The second pair of consecutive calibration peaks 60b-60s can define a second piecewise energy region 70b. Similarly, the third to seventh pairs of consecutive calibration peaks 60c-60d, 60d-60e, 60e-60f, 60f-60g and 60g-60h respectively define the third to seventh piecewise energy regions 70c, 70d, 70e, 70f and 70g.

For each piecewise energy region 70 a respective piecewise transformation can be applicable.

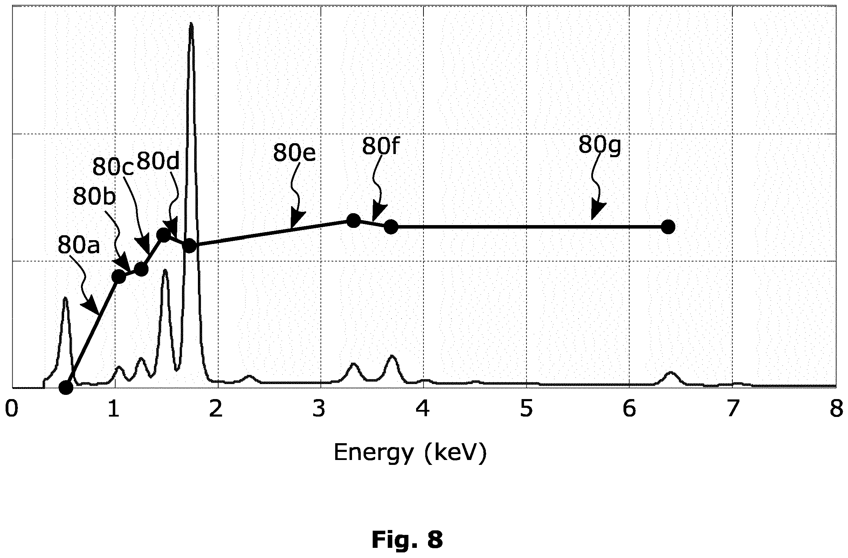

Fig. 8 illustrates said respective piecewise transformations 80 outlined over the spectrum of Fig. 6. In the depicted example, each piecewise transformation 80 is a linear transformation, as indicated by the respective line describing the respective piecewise transformation 80. That is, in Fig. 8 the lines 80a-80g can indicate the parameters of the respective piecewise transformation 80 (which in this example is of a linear type) and the filled circles depict the boundaries of respective piecewise energy regions 70 wherein each piecewise transformation 80 is applicable. Said boundaries coincide with the energies of the calibration peaks 60 in Fig. 6.

Therefore, a first piecewise transformation 80a can be applicable on the first piecewise energy region 70a. That is, all reference data for energies in the first piecewise energy regions 70 can be transformed using the first piecewise transformation 80a. Similarly, a second piecewise transformation 80b can be applicable on the second piecewise energy region 70b. That is, all reference data for energies in the second piecewise energy regions 70 can be transformed using the second piecewise transformation 80a. Similarly, third to seventh piecewise transformations 80c, 80d, 80e, 80f and 80g can be respectively applicable on the third to seventh piecewise energy regions 70c, 70d, 70e, 70f and 70g.

The piecewise transformations 80 can be defined by piecewise-defined function (also called a piecewise function).

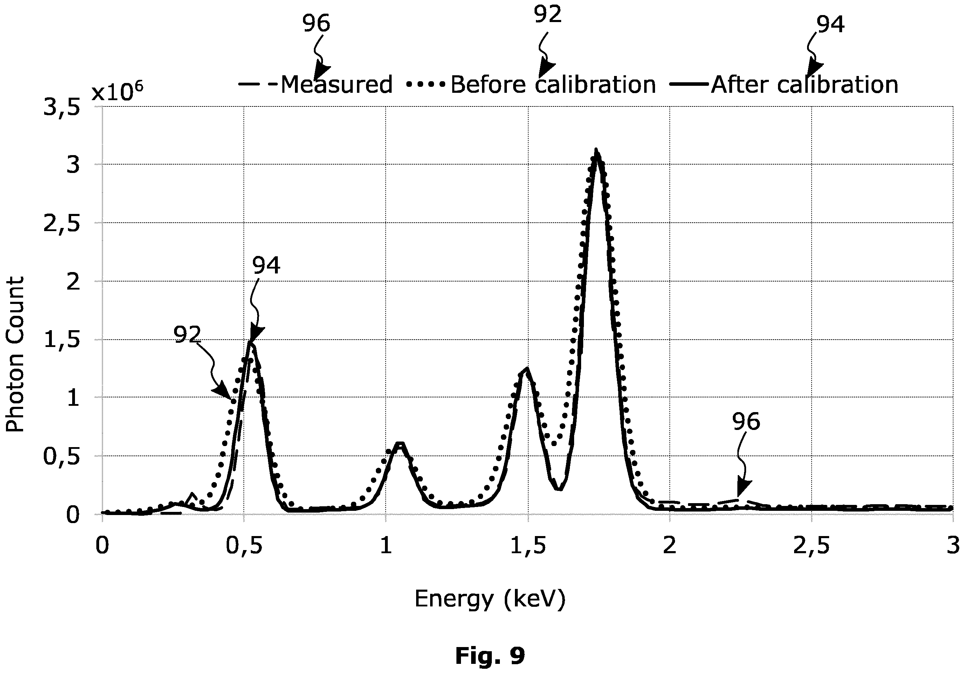

Fig. 9 illustrates a measured spectrum 96 (dashed line), a corresponding reference spectrum 92 (dotted lines) and a calibrated reference spectrum 94 (bold line). That is, for a measured spectrum 96, Fig. 9 depicts a corresponding reference spectrum before (spectrum 92) and after (spectrum 96) calibration. The calibrated reference spectrum 94 can be obtained at least by applying the peak-width transformation 50 and/or the piecewise transformation 80. As it can be noticed the calibrated reference spectrum 94 is more similar to the measured spectrum 96 than the reference spectrum 92 before calibration. In this example it was observed that a correlation between the measured spectrum 96 and the reference spectrum 92 before calibration is 97.65% while a correlation between the measured spectrum 96 and the calibrated reference spectrum 94 is 99.62%.

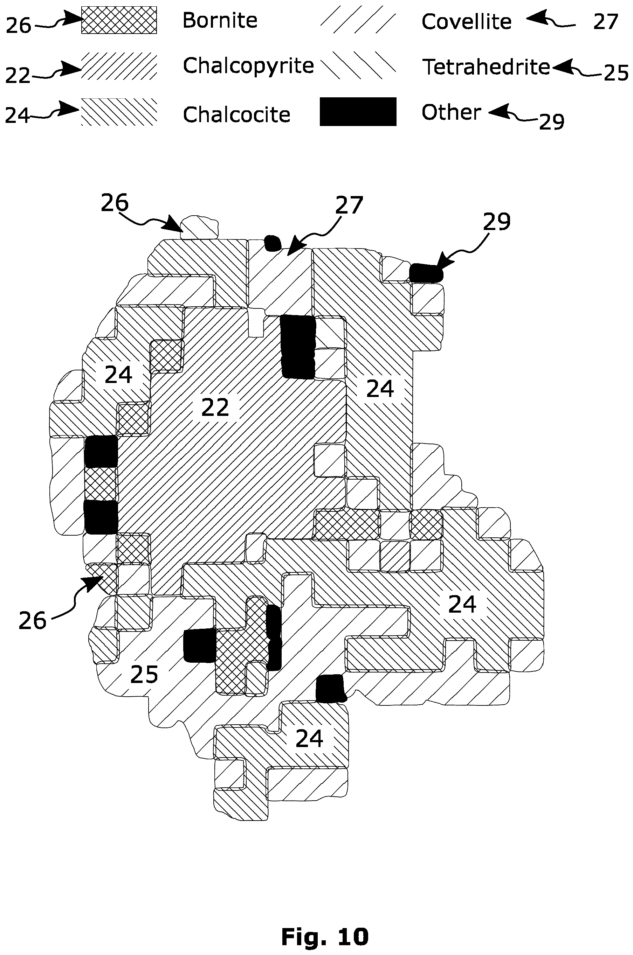

Fig. 10 is a drawing illustrating phase identification in the mineral sample of Fig. 2 using calibrated reference data which were calibrated according to techniques of the present disclosure. As it can be noticed, in the boundary between chalcopyrite 22 and chalcocite 24 the presence of bornite 26 (which is an artefact) is significantly reduced.

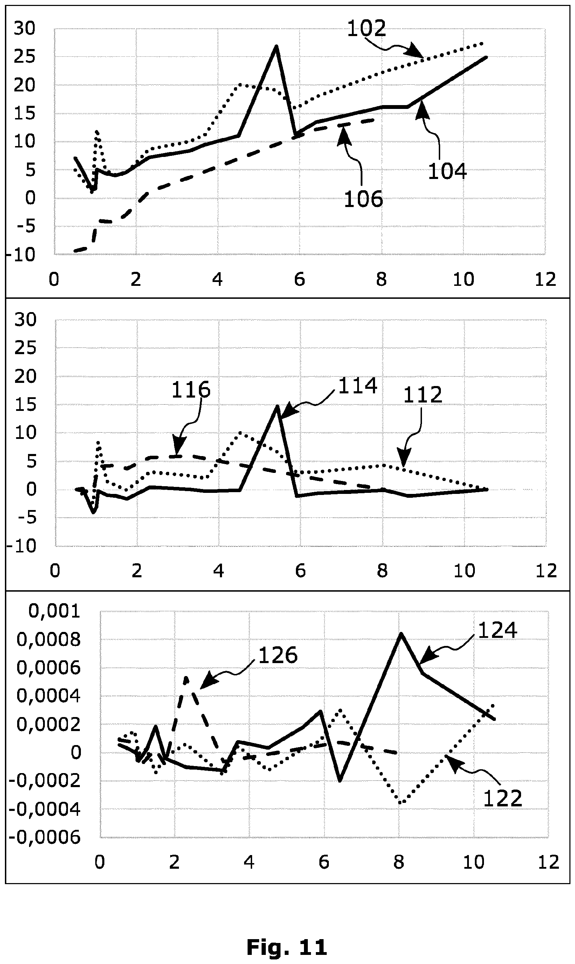

Fig. 11 illustrates a peak energy difference between 3 different measured data and corresponding reference data for scenarios wherein the reference data are not calibrated, the reference data are calibrated using existing techniques and the reference data are calibrated using teachings of the present disclosure.

In particular, the horizontal axis depicts energy levels in keV, while the vertical axis depicts peak energy delta in eV. The peak energy delta (or peak energy difference) is defined as a difference between a peak of the measured data and a corresponding peak of the (calibrated) reference data. The peak energy delta is thus a measure of the difference existing between measured data and the corresponding (calibrated) reference data. It will be appreciated that the peak energy delta should be as small as possible and ideally zero.

In the top plot the reference data are not calibrated. In the middle plot the reference data are calibrated using a prior art technique. In the bottom plot the reference data are calibrated using techniques of the present disclosure. Dotted lines 102, 112 and 122 depict the peak energy deltas for spectra obtained from a first sample. Dashed lines 106, 116 and 126 depict the peak energy deltas for spectra a second sample. Solid lines 104, 114 and 124 depict the peak energy deltas for spectra a third sample.

The prior art technique used to calibrate the reference data for the scenario illustrated in the middle plot of Fig. 11, involves the use of a single linear transformation over the entire range of reference data, said single linear transformation generated using the smallest and highest unobstructed peak on the measured data.

As depicted, the peak deltas for all three samples are smaller on the middle plot then on the top plot. That is, some improvement is provided by the prior art calibration technique. On the other hand, techniques of the present disclosure provide larger improvements, as depicted by the scale of the vertical axis. That is, it has been observed that techniques of the present disclosure provide approximately 1000 times smaller peak deltas than the prior art technique.

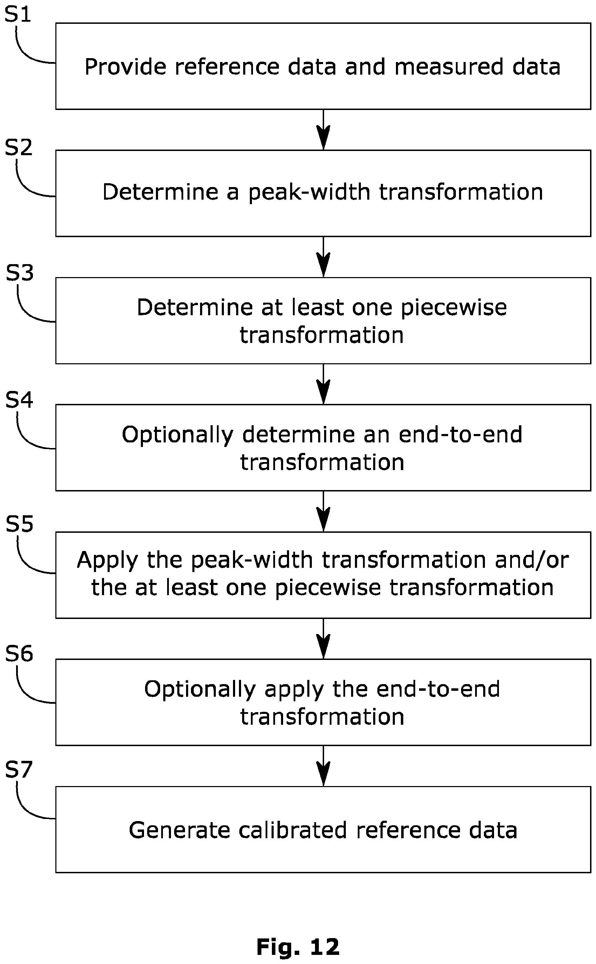

Fig. 12 depicts a flowchart of the method. The method can be used to generate calibrated reference data. For example, the method can be used to calibrated an EDS instrument.

The method comprises S1 providing reference data and measured data. The method may further comprise S2 determining a peak-width transformation. S2 can be performed as described with reference to Figs. 3-5. The method may further comprise S3 determining at least one piecewise transformation. S3 can be performed as described with reference to Figs. 6-8. Optionally the method can comprise S4 determining a single end-to-end transformation. S4 can be performed according to the prior art technique discussed with reference to Fig. 11 (middle plot). The method can further comprise S5 applying the peak-width transformation and/or the at least one piecewise transformation. Preferably, both the peak-width transformation and the at least one piecewise transformation are determined and applied. More preferably, the peak-width transformation is applied prior to the at least one piecewise transformation. Optionally the method can comprise S6 applying the end-to-end transformation. Preferably, the end-to-end transformation is applied on energy regions outside the ones wherein the at least one piecewise transformation is applied. The method comprises S7 generating calibrated reference data.

Although not depicted, the method can further comprise determining elemental composition of the sample through elemental decomposition based on the comparison of the measured data to the calibrated reference data.

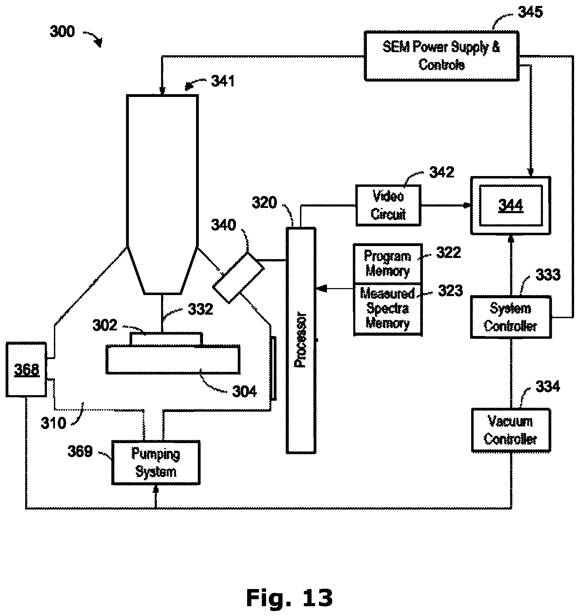

Fig. 13 shows an example of a system 300 with an x-ray detector 340 suitable for analyzing samples. A beam source 341, along with power supply and control unit 345, can be provided with system 300. A beam 332 can be emitted using the beam source 341. The beam 332 can be an electron beam, an ion beam or an x-ray beam.

A system controller 333 can control the operations of the various parts of the system 300. The vacuum chamber 310 can be evacuated with ion pump 368 and mechanical pumping system 369 under the control of vacuum controller 334.

Electron beam 332 can be focused onto sample 302 which can be provided on a sample stand 304. The sample stand 304 can be a movable X-Y stage 304 within lower vacuum chamber 310. When the beam strikes the sample 302, the sample 302 gives off x-rays whose energy correlates to the elements in the sample 302. X-rays having energy inherent to the elemental composition of the sample are produced in the vicinity of the beam incident region. Emitted x-rays are collected by x-ray detector 340, preferably an energy dispersive detector of the silicon drift detector type, although other types of detectors could be employed, which can generate a signal having an amplitude proportional to the energy of the detected x-ray.

Output from detector 340 can be amplified and sorted by the processor 320, which can count and sort the total number of x-rays detected during a specified period of time, at a selected energy and energy resolution, and a channel width of typically between 2.5 and 20 eV per channel. Processor 320 can comprise a computer processor; operator interface means (such as a keyboard or computer mouse); program memory 322 for storing data and executable instructions; interface means for data input and output, executable software instructions embodied in executable computer program code; and display 344 for displaying the results of a multivariate spectral analysis by way of video circuit 342.

Processor 320 can be a part of a standard laboratory personal computer, and is typically coupled to at least some form of computer-readable media. Computer-readable media, which include both volatile and nonvolatile media, removable and non-removable media, may be any available medium that can be accessed by processor 320. By way of example and not limitation, computer-readable media comprise computer storage media and communication media. Computer storage media include volatile and nonvolatile, removable and non-removable media implemented in any method or technology for storage of information such as computer-readable instructions, data structures, program modules or other data. For example, computer storage media include RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium that can be used to store the desired information and that can be accessed by processor 320.

Program memory 322 can include computer storage media in the form of removable and/or non-removable, volatile and/or nonvolatile memory and can provide storage of computer-readable instructions, data structures, program modules and other data. Generally, the processor 320 is programmed by means of instructions stored at different times in the various computer-readable storage media of the computer. Programs and operating systems are typically distributed, for example, on floppy disks or CD-ROMs. From there, they are installed or loaded into the secondary memory of a computer. At execution, they are loaded at least partially into the computer's primary electronic memory. The invention described herein includes these and other various types of computer-readable storage media when such media contain instructions or programs for implementing the steps described below in conjunction with a microprocessor or other data processor. The invention also includes the computer itself when programmed according to the methods and techniques described herein.

An x-ray spectrum obtained as described above can be stored in a portion of memory 322, such as the measured spectra memory portion 323. Reference data are also stored in measured spectra memory 323.

While the embodiment shown includes a scanning electron microscope, related embodiment could use a transmission electron microscope or a scanning transmission electron microscope to generate x-rays from the sample. An x-ray fluorescence system could also be used to generate x-rays from the sample. Other embodiments may detect other characteristic radiation, such as gamma rays, from a sample.

A preferred method or apparatus of the present invention has many novel aspects, and because the invention can be embodied in different methods or apparatuses for different purposes, not every aspect need be present in every embodiment. Moreover, many of the aspects of the described embodiments may be separately patentable. The invention has broad applicability and can provide many benefits as described and shown in the examples above. The embodiments will vary greatly depending upon the specific application, and not every embodiment will provide all of the benefits and meet all of the objectives that are achievable by the invention.

It should be recognized that embodiments of the present invention can be implemented via computer hardware, a combination of both hardware and software, or by computer instructions stored in a non-transitory computer-readable memory. The methods can be implemented in computer programs using standard programming techniques-including a non-transitory computer-readable storage medium configured with a computer program, where the storage medium so configured causes a computer to operate in a specific and predefined manner-according to the methods and figures described in this Specification. Each program may be implemented in a high-level procedural or object-oriented programming language to communicate with a computer system. However, the programs can be implemented in assembly or machine language, if desired. In any case, the language can be a compiled or interpreted language. Moreover, the program can run on dedicated integrated circuits programmed for that purpose.

Further, methodologies may be implemented in any type of computing platform, including but not limited to, personal computers, mini-computers, main-frames, workstations, networked or distributed computing environments, computer platforms separate, integral to, or in communication with charged particle tools or other imaging devices, and the like. Aspects of the present invention may be implemented in machine readable code stored on a non-transitory storage medium or device, whether removable or integral to the computing platform, such as a hard disc, optical read and/or write storage mediums, RAM, ROM, and the like, so that it is readable by a programmable computer, for configuring and operating the computer when the storage media or device is read by the computer to perform the procedures described herein. Moreover, machine-readable code, or portions thereof, may be transmitted over a wired or wireless network. The invention described herein includes these and other various types of non-transitory computer-readable storage media when such media contain instructions or programs for implementing the steps described above in conjunction with a microprocessor or other data processor. The invention also includes the computer itself when programmed according to the methods and techniques described herein.

Computer programs can be applied to input data to perform the functions described herein and thereby transform the input data to generate output data. The output information is applied to one or more output devices such as a display monitor. In preferred embodiments of the present invention, the transformed data represents physical and tangible objects, including producing a particular visual depiction of the physical and tangible objects on a display.

In the following discussion and in the claims, the terms "including" and "comprising" are used in an open-ended fashion, and thus should be interpreted to mean "including, but not limited to" To the extent that any term is not specially defined in this specification, the intent is that the term is to be given its plain and ordinary meaning. The accompanying drawings are intended to aid in understanding the present invention and, unless otherwise indicated, are not drawn to scale. Particle beam systems suitable for carrying out the present invention are commercially available, for example, from FEI Company, the assignee of the present application.

Although the present invention and its advantages have been described in detail, it should be understood that various changes, substitutions and alterations can be made to the embodiments described herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A method, comprising:
providing reference data indicative of at least one reference energy-dispersive x-ray spectrum;
providing measured data indicative of at least one measured energy-dispersive x-ray spectrum obtained from a sample;
determining a transformation based on a comparison of the measured data with the reference data;
the method further comprising detecting on the measured data calibration peaks and
wherein determining a transformation comprises determining at least one piecewise transformation based on the calibration peaks and the reference data.

2. The method according to the preceding claim,
wherein the measured data comprises measured spectrum peaks;
wherein the calibration peaks are a subset of the measured spectrum peaks;
wherein detecting on the measured data calibration peaks comprises classifying at least some of the measured spectrum peaks as calibration peaks

3. The method according to the preceding claim, wherein classifying at least some of the measured spectrum peaks as calibration peaks is based on an intensity of the measured spectrum peaks relative to a background radiation intensity.

4. The method according to any of the 2 preceding claims, wherein a particular measured spectrum peak is classified as a calibration peak if it is unobstructed such that any other measured spectrum peak in the measured data, present in the same measured spectrum as the particular measured spectrum peak, has an energy difference from the particular measured spectrum peak that exceeds an obstruction threshold.

5. The method according to any of the preceding claims, wherein detecting on the measured data calibration peaks comprises
(a) for each measured spectrum in the measured data:
(a1) detecting all measured spectrum peaks in the measured spectrum;
(a2) rejecting measured spectrum peaks in the measured spectrum that comprise a peak-to-background ratio smaller than an intensity ratio threshold, wherein the peak-to-background ratio is a ratio between an intensity of the measured spectrum peak and a background radiation intensity;
(a3) rejecting measured spectrum peaks in the measured spectrum that overlap with other measured spectrum peaks in that measured spectrum, wherein two peaks in a measured spectrum overlap if they comprise an energy difference that is smaller than an obstruction threshold;
(b) grouping all non-rejected measured spectrum peaks from (a) in groups according to the x-ray emission line that they are indicative of;
(c) from each of the groups, determining the non-rejected measured spectrum peak with the highest peak-to-background ratio as a calibration peak.

6. The method according to any of the preceding claims, wherein each of the at least one piecewise transformation is determined based on a respective pair of consecutive calibration peaks,
wherein two calibration peaks are consecutive if no other calibration peak of the measured data comprises an energy between the energy of the two consecutive calibration peaks.

7. The method according to the preceding claim, wherein each of the at least one piecewise transformation is selectively applied to a respective piecewise energy region of the reference data encompassing energies between or equal to respective energies of the respective pair of calibration peaks.

8. The method according to any of the preceding claims, wherein each one of the at least one piecewise transformation is a linear transformation.

9. The method according to any of the preceding claims, wherein the method comprises
computing reference peak-width parameters for a plurality of reference spectrum peaks, respectively, wherein each reference peak-width parameter is indicative of an energy range encompassed by the respective reference spectrum peak;
computing measured peak-width parameters for a plurality of measured spectrum peaks, respectively, wherein each measured peak-width parameter is indicative of an energy range encompassed by the respective measured spectrum peak;
wherein determining a transformation comprises determining a peak-width transformation based on the reference peak-width parameters and on the measured peak-width parameters.

10. The method according to any of the preceding claims,
wherein determining a transformation comprises determining an end-to-end transformation based on a first measured spectrum peak, a second measured spectrum peak and the reference data;
wherein the first measured spectrum peak is a first unobstructed measured spectrum peak with the lowest energy in the measured data and
the second measured spectrum is a second unobstructed measured spectrum peak with the highest energy in the measured data,
wherein a particular measured spectrum peak is unobstructed if any other spectrum peak in the measured data, present in the same measured spectrum as the particular measured spectrum peak has an energy difference from the particular measured spectrum peak that exceeds an obstruction threshold.

11. The method according to any of the preceding claims, further comprising applying the transformation to the reference data to generate calibrated reference data.

12. The method according to the 2 preceding claims, wherein applying the transformation comprises,
applying the at least one piecewise transformation at energy regions encompassing energies between a minimum and maximum energy of the calibration peaks, inclusive, and
applying the end-to-end transformation at energy regions encompassing energies smaller than the minimum energy of the calibration peaks and energies larger than the maximum energy of the calibration peaks.

13. The method according to any of 2 the preceding claims and with the features of claim 9, wherein applying the peak-width transformation comprises adjusting the reference peak-width parameter of at least one reference spectrum peak using the peak-width transformation.

14. The method according to any of the 3 preceding claims, further comprising determining elements contained in the sample by comparing the measured data to the calibrated reference data.

15. A system comprising:
a beam source for emitting a beam onto a sample;
an x-ray detector for detecting x-rays emitted from the sample upon impact of the beam;
a computer readable memory storing reference data indicative of at least one reference energy-dispersive x-ray spectrum and computer instructions for:
obtaining measured data indicative of at least one measured energy-dispersive x-ray spectrum obtained from a sample;
determining a transformation based on a comparison of the measured data with the reference data;
wherein the system is configured to carry the method according to any of the preceding claims.
